# EUROPEAN PATENT SPECIFICATION

(11) **EP 2 328 200 B1**
(45) Date of publication and mention of the grant of the patent: **22.08.2012**
(21) Application number: 10251905.5
(22) Date of filing: 05.11.2010
(51) Int. Cl.: H01M 2/04, H01M 2/10, H01M 2/22, H01M 2/30, H01M 10/04, H01M 10/42

(54) **Battery assembly**
Batterieanordnung
Ensemble de batterie

(30) Priority: 30.11.2009 US 265265 P
(43) Date of publication of application: 01.06.2011
(73) Proprietor: Samsung SDI Co., Ltd, Gyeonggi-do (KR)
(72) Inventor: Lee, Sang-Joo, Gyeonggi-do (KR)
(74) Representative: Mounteney, Simon James

(56) References cited:
- EP-A2- 1 753 050
- WO-A1-2007/046579
- KR-A- 20090 011 994

## Description

### 1. Field of the Invention

The present invention relates to a battery assembly and, more particularly, to a battery assembly with a holder case.

### 2. Discussion of Related Art

A secondary battery assembly typically includes a chargeable/dischargeable bare cell, a protection circuit module (PCM) that is electrically coupled to the bare cell to control charging/discharging and break a circuit in the event of overcharging/overdischarging, a holder case that is positioned between the bare cell and the protection circuit module, and a top case.

The holder case serves to electrically insulate an area where the bare cell and the protection circuit module are in contact with each other excluding an area where positive and negative electrodes of the bare cell and the protection circuit module are electrically connected to each other. The protection circuit module is seated on the top of the holder case. In addition, the bare cell and the protection circuit module are integrally packed using the top case, which has a shape that conforms to the external apparatus.

An external input/output terminal portion is typically formed at one side of the protection circuit module and a terminal exposure portion is formed in the top case in order to expose the external input/output terminal portion. However, when the external input/output terminal portion and the protection circuit module are integrally assembled at the time of assembling the battery assembly, if the battery is of a type in which the terminal of the pack projects and the terminal portion is shaken or the protection circuit module is not securely fixed, then the protection circuit module may be bent or shaken, even if the top case is applied afterwards to pack the bare cell and the protection circuit module.
KR 20090011994 discloses a battery pack that comprises a battery cell which is provided with an anode terminal at an upper part, and a cathode terminal at a lower part. A protection circuit module is provided for preventing overcharging or discharging, the protection circuit module being arranged at one side of the battery cell. An anode terminal plate connects the protection circuit module to the anode terminal, and a cathode terminal plate connects the protection circuit module to the cathode terminal.

### SUMMARY OF THE INVENTION

Accordingly, the invention sets out to provide a battery assembly that includes a holder case having a new structure in which a protection circuit module can be securely coupled to a holder case.

Further, the invention set out to provide a battery assembly capable of preventing the protection circuit module from being dislodged by securely fixing the protection circuit module to the holder case and omitting a process of attaching the protection circuit module to the holder case at the time of assembling the battery pack.

According to an aspect of the present invention, a battery assembly includes a bare cell; a protection circuit module that is electrically connected with the bare cell and has an internal terminal portion at one side thereof, and a holder case that is installed between the bare cell and the protection circuit module and has an external input/output terminal portion and a terminal connection portion connected with the external input/output terminal portion, wherein the holder case includes a support as an insulator, an external input/output terminal portion formed on one surface of the support, and a terminal connection portion connected with the external input/output terminal portion and the protection circuit module is housed in and fixed to the holder case so that the internal terminal portion contacts the terminal connection portion.

Herein, the external input/output terminal portion of the holder case may be circumscribed onto one surface of the support and the terminal connection portion may be spaced from the support by a predetermined gap.

Further, a pad portion with the internal terminal portion of the protection circuit module is coupled between the terminal connection portion and the support of the holder case.

Further, a longitudinal extension portion may be formed on one surface of the support and external input/output terminal portion may be circumscribed onto the longitudinal extension portion.

Further, the support further includes a support portion at a position facing the external input/output terminal portion, such that the internal terminal portion of the protection circuit module is inserted into the lower part of the terminal connection portion between the external input/output terminal portion and the support portion to contact the bottom surface of the terminal connection portion.

Further, a projection portion may be further formed in the protection circuit module that is in contact with the external input/output terminal portion and both ends of the support portion.

Further, a first connection tab is formed on one end of the protection circuit module to be connected with an electrode terminal of the bare cell and a second connection tab is formed at one portion of the bottom of the protection circuit module to be connected with the exterior of the bare cell.

At this time, a first hole and a second hole for welding the second connection tab to the exterior of the bare cell may be formed in the holder case and the protection circuit module, respectively.

In addition, the internal terminal portion and the terminal connection portion may be fixed by welding and the holder case may be attached to the bare cell by using an insulating tape.

Moreover, a base material of the protection circuit module may be formed by a flexible printed circuit board.

Meanwhile, a pair of ribs may be formed on both ends of the support on the bottom of the holder case. In addition, the ribs may, of course, be partially formed. Further, a lead plate such as the second connection tab may be seated between the ribs by forming the ribs and the holder case is thus fixed to the bottom of the bare cell without shaking.

In addition, a top case is further provided on the top of the protection circuit module and a terminal exposure portion for exposing the external input/output terminal portion may be further formed the top case.

Further, a label sheet covering the exteriors of the bare cell and the top case may be further provided and a groove portion may be formed at a portion of the label sheet that is in contact with the terminal exposure portion.

As described above, according to an embodiment of the present invention, a protection circuit module is fixed to a holder case by fit-coupling to prevent the protection circuit module from being pushed, such that a phenomenon in which an external input/output terminal portion is shaken is improved and a process of attaching the protection circuit module to the holder case is omitted, thereby improving productivity due to a decrease in number of processes.

It is possible to form a battery assembly more compactly by using a flexible printed circuit board (FPCB) as a material of the protection circuit module.

The above and other features of the invention are set out in the appended claims.

### BRIEF DESCRIPTION OF THE DRAWINGS

The accompanying drawings, together with the specification illustrate embodiments of the present invention, and, together with the description, serve to explain the principles of the present invention.

FIG. 1 is an exploded perspective view showing a battery assembly according to an embodiment of the present invention.

FIG. 2A is a perspective view more specifically showing the protection circuit module and the holder case of FIG. 1.

FIG. 2B is a perspective view of a protection circuit module and holder case according to another embodiment of the invention.

FIG. 3A is a bottom perspective view showing a state where the protection circuit module and holder case are coupled with each other in the embodiment of Figure 1.

FIG. 3B is a perspective view corresponding to FIG. 3A, but showing a further embodiment of the invention.

FIG. 4A is a perspective view showing a state where the protection circuit module and a holder case are coupled with each other in the embodiment of FIG. 1.

FIG. 4B is a view corresponding to FIG. 4A, but showing an alternative embodiment of the invention.

FIG. 5 is a cross-sectional schematic view taken along line A-A' of FIG. 4A.

FIG. 6 is a perspective view showing the embodiment of FIG. 1 in an assembled state.

### DETAILED DESCRIPTION OF THE INVENTION

Hereinafter, certain embodiments of the present invention will be described with reference to the accompanying drawings. Here, when a first element is described as being coupled to a second element, the first element may be not only directly coupled to the second element but may also be indirectly coupled to the second element via a third element. Further, some of the elements that are not essential to the complete understanding of the invention are omitted for clarity. Also, like reference numerals refer to like elements throughout.

Since a structure in which a bare cell and a protection circuit module are coupled with each other is typically referred to as a "core pack", this term is used in the following description to describe an arrangement in which a bare cell, a protection circuit module, and a holder case positioned therebetween are coupled to each other.

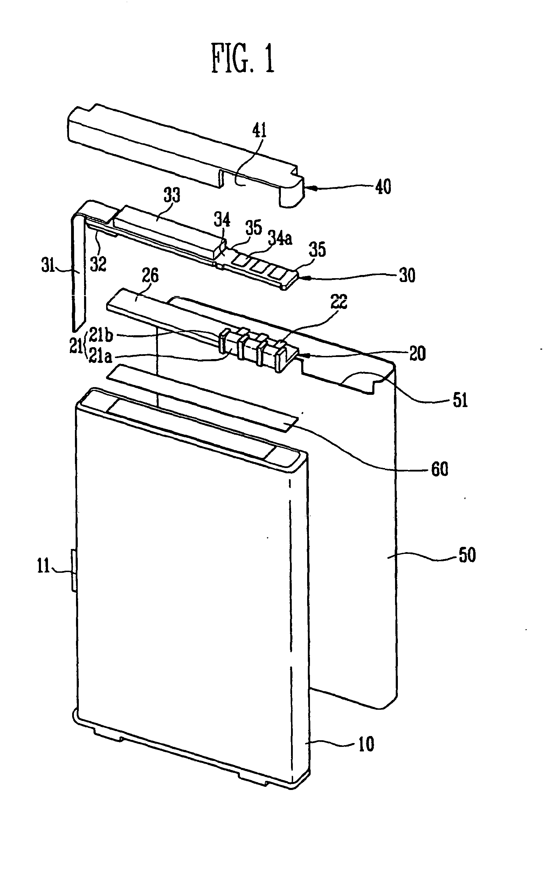

FIG. 1 is an exploded perspective view showing a battery assembly according to a first embodiment of the present invention.

Referring to FIG. 1, the battery assembly according to the embodiment of the present invention includes a bare cell 10, a holder case 20, a protection circuit module 30, a top case 40, and a label sheet 50. Herein, the protection circuit module 30 is electrically connected with the bare cell 10. A pad portion 34 with an internal terminal portion 34a is formed at one side of the protection circuit module 30 and a circuit mounting portion 33 is formed at the other side of the protection circuit module 30. In addition, the holder case 20 is installed between the bare cell 10 and the protection circuit module 30. The holder case 20 includes a support formation in the form of a support 26, an external input/output terminal portion 21 formed on one surface of the support 26, and a terminal connection portion 22 connected with the external input/output terminal portion 21, such that the protection circuit module 30 is housed in and fixed to the holder case 20 so that the internal terminal portion 34a of the protection circuit module 30 contacts the terminal connection portion 22.

When the bare cell 10 is schematically described, the bare cell may have a can shape or a pouch shape, but in the embodiment of the present invention, the can-shaped bare cell will be described as an example. Furthermore, although the protection circuit module 30 and holder case are shown at the top of the battery assembly, they could be located at the bottom or side. In such a case they would not be enclosed by a top case, but some other suitable component.

The bare cell 10 includes an electrode assembly and a can housing the electrode assembly. The electrode assembly includes a positive plate coated with a positive active material on both surfaces thereof, a separator, and a negative plate coated with a negative active material on both surfaces thereof. Electrode tabs are joined to areas extending from the positive plate and the negative plate. One of the electrode tabs is connected to the can or a cap plate and the other one of the electrode tab is connected to an electrode terminal 11 and is drawn out of the can to be electrically connected with the protection circuit module 30. At this time, in order to electrically connect the protection circuit module 30 with the bare cell 10, a first connection tab 31 is formed at one end of the protection circuit module 30 and a second connection tab 32 is formed at one lower portion of the protection circuit module 30.

The holder case 20 is attached to the bare cell 10 by an insulating tape 60. A body portion of the holder case 20 includes the support 26 that is formed by an insulator and supports the protection circuit module 30, the external input/output terminal portion 21, and the terminal connection portion 22 that is electrically and physically connected with the external input/output terminal portion 21. The external input/output terminal portion 21 is integrally formed on one side of the support 26 to serve as an electrical medium for transmitting and receiving an electrical signal between the bare cell 10 and an external apparatus (not shown).

Herein, the external input/output terminal portion 21 is circumscribed onto one surface of the support 26 and the terminal connection portion 22 is spaced from the top surface of the support 26 by a predetermined gap to form a space. The pad portion 34 with the internal terminal portion 34a of the protection circuit module 30 is sliding-inserted or fitting-inserted into the above-described space.

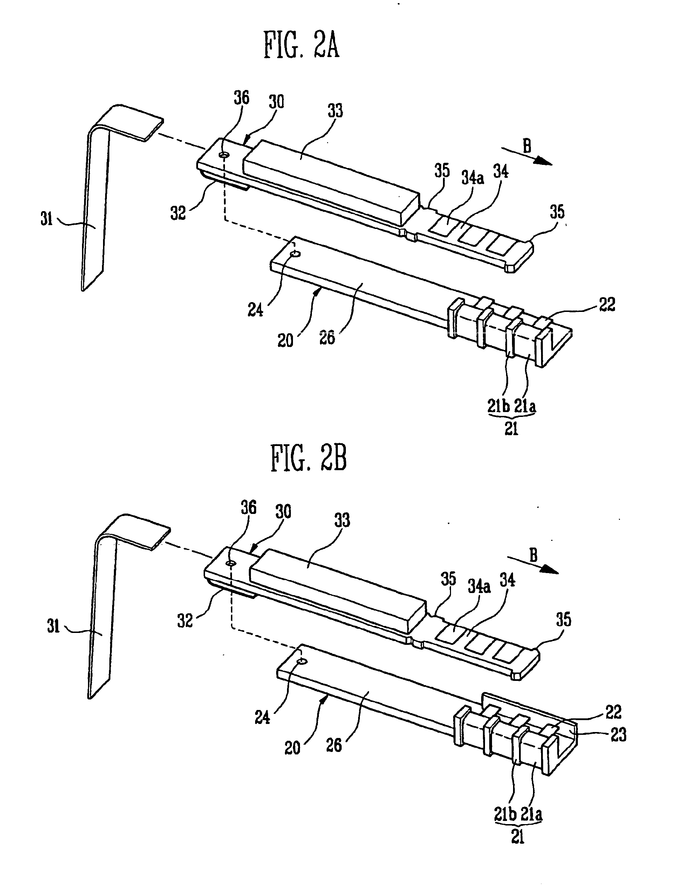

FIG. 2B shows an alternative embodiment in which a support portion 23 is further provided at a position facing the external input/output terminal portion 21. By this configuration, the pad portion 34 with the internal terminal portion 34a of the protection circuit module 30 is inserted into the lower portion of the terminal connection portion 22 between the external input/output terminal portion 21 and the support portion 23 to contact the bottom of the terminal connection portion 22.

In addition, in the first embodiment of the present invention, the external input/output terminal portion 21 is circumscribed onto one surface of the support 26 and one surface of the support 26 vertically extends to be circumscribed to the external input/output terminal portion 21, which is projected to one upper side of the bare cell. Herein, a part that extends upwards on one surface of the support 26 and is not circumscribed to a metal portion 21 a of the external input/output terminal portion 21 will be referred to as a longitudinal extension portion 21 b and separately described.

That is, the external input/output terminal portion 21 includes the longitudinal extension portion 21 b and the metal portion 21 a circumscribed to one portion of the longitudinal extension portion 21 b. Herein, the metal portion 21 a is plated with a conductive material, i.e., gold (Au), Copper (Cu), etc. to allow an electrical signal to flow between the bare cell 10 and the external apparatus. In addition, the longitudinal extension portion 21 b is made of a plastic material, which is an insulating material, to serve to inter-insulate the metal portions 21 a interposed in the longitudinal extension portion 21 b by regular intervals.

Further, a circuit mounting portion 33 is further provided on a printed circuit board (reference numeral not shown) of the protection circuit module 30 that is seated and fixed to the holder case 20. A protection circuit is formed in the circuit mounting portion 33, such as a circuit for uniformly maintaining a charging state of the battery or a circuit for preventing overdischarging and overcharging by controlling charging and discharging of the battery. Further, the protection circuit module 30 may include a protection element such as a thermistor or a temperature fuse. They prevent risks such as explosion, firing, etc. of the battery by cutting current when the voltage and current of the battery rise over a standard or more due to an increase in high temperature or excessive charging/discharging of the battery.

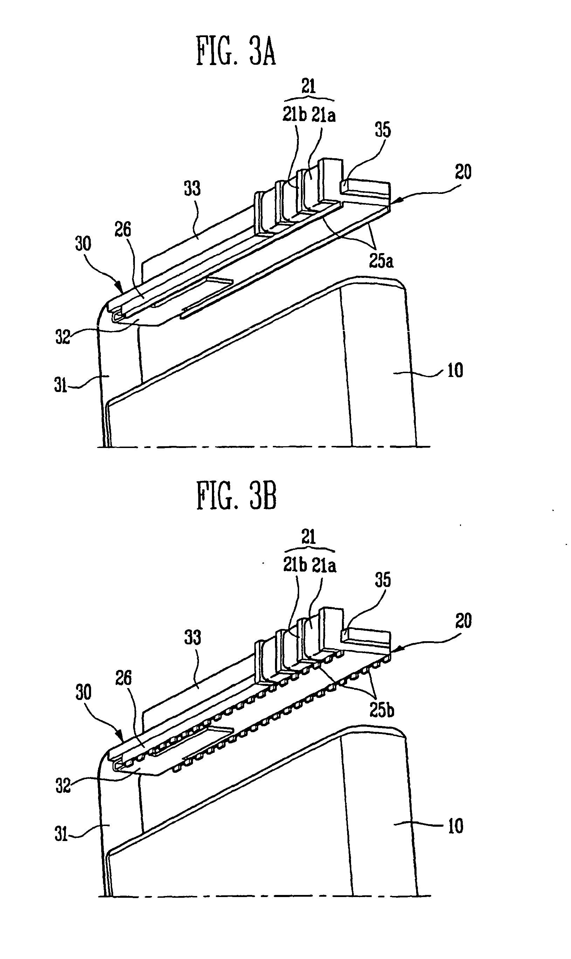

During assembly, an internal terminal portion 34a of the protection circuit module 30 is inserted into and fixed to the lower portion of the terminal connection portion 22 on the top of the support 26 of the holder case 20. Therefore, a projection portion 35 is additionally formed at each end of the protection circuit module 30 for making contact with both end portions of the external input/output terminal portion 21. The protection portions 35 allow the protection circuit module 30 to be fixed to the holder case 20 without shaking when inserted between the terminal connection portion 22 and the holder case 20. The structure in which the protection circuit module 30 is fixed to the holder case 20 will be described in detail with reference to FIGS. 3 to 5.

The top case 40 that covers the protection circuit module 30 connected to the bare cell 10 and forms a part of an exterior of the battery assembly is coupled to the core pack. Further, the label sheet 50 covering parts of outer portions of the bare cell 10 and the top case 40 is further formed in the core pack. By this configuration, it is possible to enforce the coupling force between the bare cell 10 and the top case 40. In addition, a terminal exposure portion 41 and a groove portion 51 for exposing the external input/output terminal portion 21 to the outside are provided in the top case 40 and the label sheet 50, respectively.

FIG. 2A is a perspective view more specifically showing the protection circuit module and the holder case of FIG. 1.

Referring to FIG. 2A, the internal terminal portion 34a of the protection circuit module 30 is sliding-inserted between the holder case 20 and the terminal connection portion 22 in a B direction to contact the lower part of the terminal connection portion 22 of the holder case 20. The insertion direction is shown as one example. Besides, the internal terminal portion 34a may be inserted and coupled in an opposite direction to the external input/output terminal portion 21 of the holder case 20 by a forced-fitting scheme or various joining methods.

A first connection tab 31 for connecting the electrode terminal 11 (see FIG. 1) of the bare cell 10 (see FIG. 1) is formed on one end of the protection circuit module 30 and a second connection tab 32 for connecting an outer surface of the bare cell 10 is formed in one lower portion of the protection circuit module 30. The bare cell 10 and the protection circuit module 30 may be electrically connected by the first connection tab 31 and the second connection tab 32.

At this time, the second connection tab 32 is attached onto the outer surface of the bare cell 10 by welding. For this, a first hole 24 and a second hole 36 are formed at portions of the holder case 20 and the protection module 30 where the second connection tab 32 is positioned, respectively. By this configuration, when the second connection tab 32 is welded to the bare cell 10, the second connection tab 32 may be easily welded as it is exposed to the outside.

FIG. 2B is a view corresponding to FIG. 2A, but showing an alternative embodiment of the invention. As shown in the figure, an additional support portion 23 is further provided at a position facing the external input/output terminal portion 21 of the holder case 20. The pad portion 34 with the internal terminal portion 34a of the protection circuit module 30 is inserted into the lower portion of the terminal connection portion 22 between the external input/output terminal portion 21 and the support portion 23. In addition, the support portion 23 can support the protection circuit module 30 more securely on the holder case 20 without shaking.

FIG. 3A is a bottom perspective view showing a state where the protection circuit module and holder case are coupled with each other.

Referring to FIG. 3A, the holder case 20 may be attached to the bare cell 10 by using various schemes such as an adhesive tape (not shown), welding, or the like. At this time, a pair of rib formations in the form of ribs 25a are additionally formed on opposite sides of the bottom of the holder case 20, that is, the bottom of the support 26. The second connection tab 32 formed at one lower portion of the protection circuit module 30 is seated between the pair of ribs 25a. The pair of ribs 25a may be usefully used as a seating space for a secondary plate such as the second connection tab 32.

It is possible to seat the holder case 20 at an accurate position on the bare cell 10 by using the ribs 25a. That is, the ribs 25a on the bottom of the holder case 20 are positioned on either side of the upper exterior of the bare cell 10, so as to facilitate position alignment and improve shape synthesis at the time of coupling the bare cell 10 with the holder case 20.

The base material of the protection circuit module 30 of the present invention may be formed by a flexible printed circuit board (FPCB). As a result, it is possible to lower the height of the protection circuit module 30 to implement a more compact battery assembly.

FIG. 3B is a view corresponding to FIG. 3A but showing an alternative embodiment of the invention. In FIG. 3B, a pair of rib formations 25b are formed at opposite sides of the bottom of the support 26. In this embodiment the rib formations are each formed of a series of discrete rib elements 25b that are spaced at intervals from the both ends of the bottom of the support 26. Although the rib formations have this configuration, the second connection tab 32 is still seated and a space sufficient to stably support the protection circuit module 30 without shaking on the top of the bare cell 10 provided.

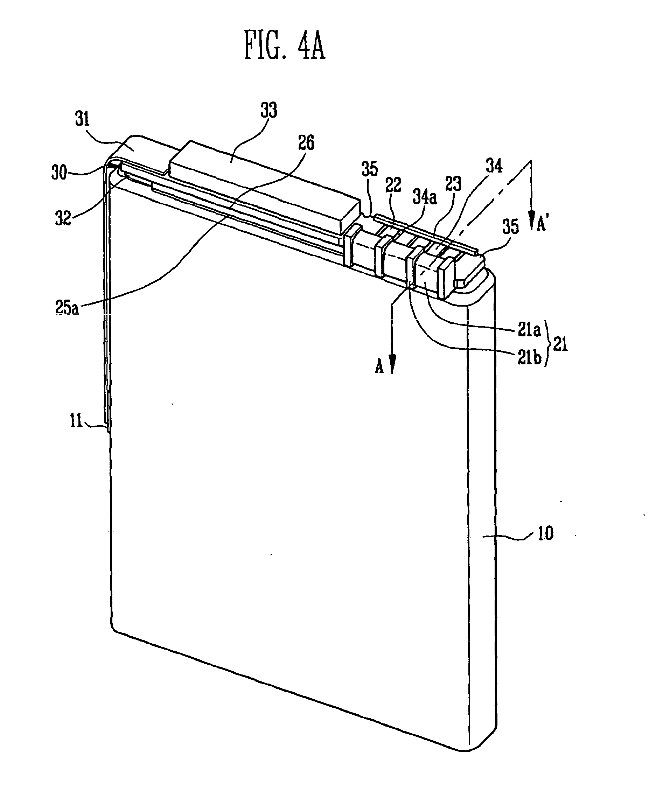

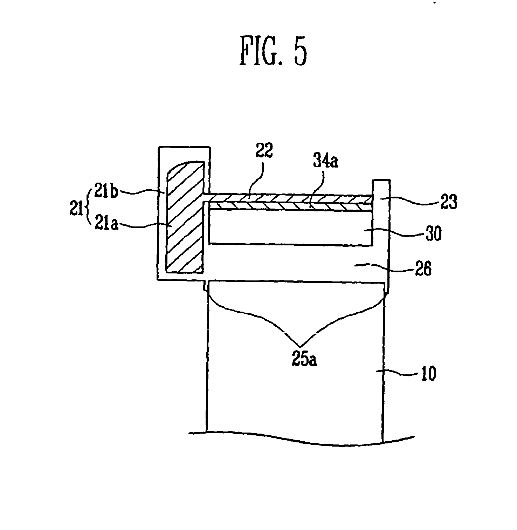

FIG. 4A is a perspective view showing a state where the protection circuit module and the holder case are coupled with each other and FIG. 5 is a cross-sectional view taken along line A-A' of FIG. 4A.

Referring to FIGS. 4A and 5, the terminal connection portion 22 is supported by the support portion 23 formed on the other surface of the holder case 20 facing the external input/output terminal portion 21 formed circumscribed onto the one surface of the holder case 20. By this configuration, the terminal connection portion 22 is spaced from the support 26 of the holder case 20 by a predetermined gap.

The pad portion 34 formed at one end of the protection circuit module 30 is inserted between the holder case 20 and the terminal connection portion 22 that are spaced from each other as described above, such that the internal terminal portion 34a is contacted with the bottom of the terminal connection portion 22 to be electrically connected with each other. Therefore, the internal terminal portion 34a may transmit the electrical signal from the bare cell 10 to the terminal connection portion 22. In addition, since the terminal connection portion 22 is connected to the external input/output terminal portion 21 exposed outside of the battery assembly, the electrical signal from the bare cell 10 may be transmitted to an external apparatus through the external input/output terminal portion 21.

That is, the internal terminal portion 34a of the protection circuit module 30 may transmit the electrical signal from the bare cell 10 to the external input/output terminal portion 21 of the holder case 20 through the terminal connection portion 22.

In addition, projection portions 35 are additionally formed on a part of the protection circuit module 30 that is in contact with both end portions of the external input/output terminal portion 21 and the support portion 23 in order to secure the protection circuit module 30 when it is inserted between the holder case 20 and the terminal connection portion 22.

The projection portions 35 have a rounded shape to help overcome resistance that is temporarily generated at the time of inserting the protection circuit module 30 into the holder case 20. The protection circuit module 30 is prevented from displacement by friction-coupling, thereby fixing the protection circuit module 30 to the holder case 20, so as to prevent the external input/output terminal portion 21 from being dislodged. Furthermore, by omitting the process of attaching the protection circuit module 30 to the holder case 20, the number of processes is reduced, so as to improve productivity.

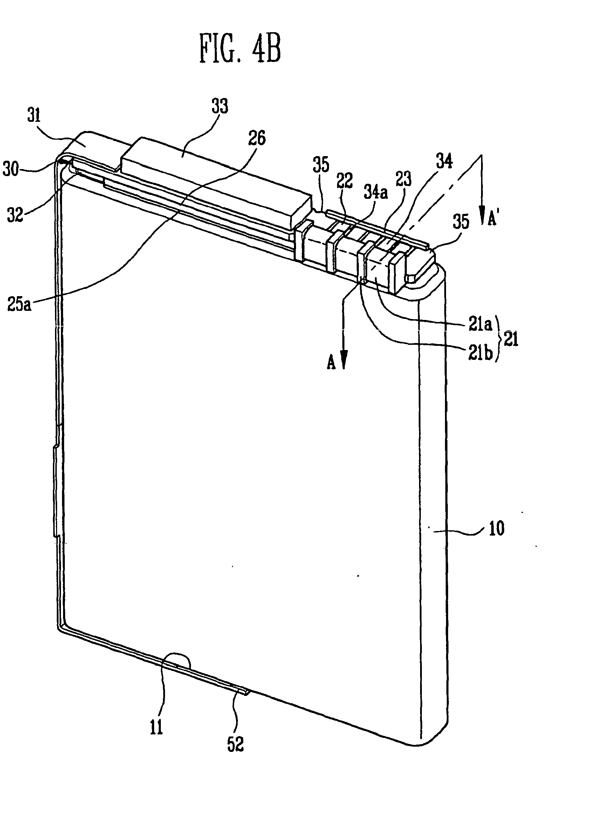

FIG. 4B is a view corresponding to FIG. 4A, but showing an alternative embodiment of the invention. In this embodiment, the electrode terminal 11 is located on the bottom of the bare cell, rather than the side. The first connection tab 31 extends all the way down the side of the can to connect with the electrode terminal 11 in an end region thereof. In this embodiment, the first connection tab includes an integral positive temperature coefficient element.

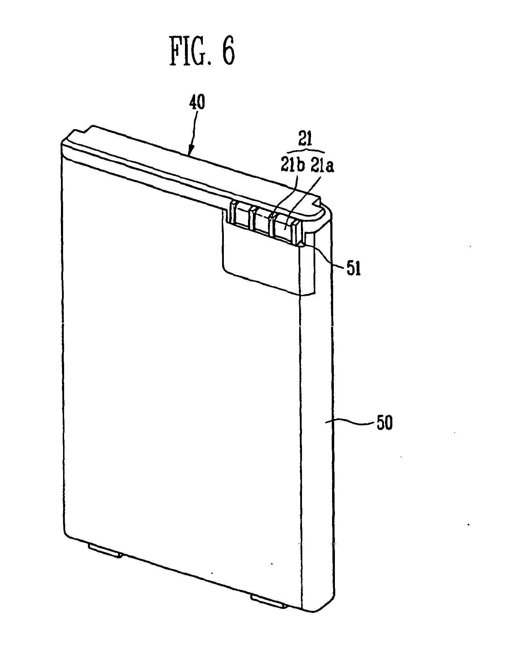

FIG. 6 is a perspective view showing the first embodiment of the invention in an assembled state.

Referring to FiG. 6, the top case 40 with the terminal exposure portion 41 for exposing the external input/output terminal portion 21 to cover the protection circuit module 30 is further formed outside of the core pack. In addition, the label sheet 50 for covering parts of the exteriors of the core pack and the top case 40 is further formed. The groove portion 51 is formed in a portion of the label sheet that is in contact with the terminal exposure portion 41 so as to expose the external input/output terminal portion 21 to the outside.

The label sheet 50 is used to reinforce the coupling between the core pack and the top case 40. The label sheet 50 may have a shape that serves to partially cover only a joint between the top case 40 and the core pack or it may have a single sheet shape that serves to cover the entire exteriors of the top case 40 and the core pack. Herein, the shape of the label sheet 50 is not limited.

The label sheet 50 may be printed with a discharging capacity, a manufacturing date or the like of a secondary battery and may be a packing label sheet including a function to protect or insulate the secondary battery. The material of the packing label sheet may include a synthetic resin, paper, or the like which is typically a packing material, but in one embodiment, adopts a contraction tub.

## Claims

1. A battery assembly comprising
a bare cell (10);
a protection circuit module (30) that is electrically connected with the bare cell (10) and comprises an internal terminal portion (34a); and
a holder case (20) that is mounted on the bare cell (10) and comprises an external input/output terminal portion (21) for connection to an external device and a terminal connection portion (22) connected with the external input/output terminal portion (21);
wherein the protection circuit module (30) is seated on the holder case (20) so that the internal terminal portion (34a) contacts the terminal connection portion (22).

2. A battery assembly according to Claim 1, wherein the holder case (20) comprises a support formation (26) upon which the protection circuit module (30) is supported and the terminal connection portion (22) is spaced from the support formation (26) by a predetermined gap.

3. A battery assembly according to Claim 2, wherein the protection circuit module (30) comprises a pad portion (34), the internal terminal portion (34a) is situated upon the pad portion (34), and the pad portion (34) is received within the said gap.

4. A battery assembly according to Claim 2 or 3. wherein the holder case (20) comprises a longitudinal extension portion projecting from the support formation (26) and the external input/output terminal portion (21) is located on the longitudinal extension portion.

5. A battery assembly according to Claim 4, wherein the longitudinal extension portion is arranged in one side region of the holder case (20) and the holder case (20) further includes a support portion at a position facing the external input/output terminal portion, the terminal connection portion (22) being located between the longitudinal extension portion and the support portion.

6. A battery assembly according to claim 5 when dependent upon Claim 3, wherein the pad portion (34) comprises at least one projection portion for retaining the pad portion (34) between the longitudinal extension portion and the support portion.

7. A battery assembly according to any preceding claim, wherein a first connection tab (31) is located in one end region of the protection circuit module (30) and connected with an electrode terminal (11) of the bare cell (10); and a second connection tab (32) is located in a bottom region of the protection circuit module (30) and connected with the exterior of the bare cell (10).

8. A battery assembly according to Claim 7, further comprising a positive temperature coefficient element connected between one of the said connection tabs and the bare cell (10).

9. A battery assembly according to claim 7 or 8, comprising a first hole in the protection circuit module (30) and a second hole in the holder case (20) for welding the second connection tab (32) to the exterior of the bare cell (10).

10. A battery assembly according to any preceding claim, wherein the internal terminal portion (34a) and the terminal connection portion (22) are welded together.

11. A battery assembly according to any preceding claim, wherein the holder case (20) is attached to the bare cell via insulating tape (60).

12. A battery assembly according to any preceding claim, wherein a pair of opposed rib formations (25a, 25b) is formed on the bottom of the holder case (20), each said rib formation (25a, 25b) being formed in a respective edge region.

13. A battery assembly according to Claim 12, wherein at least one of the rib formations (25b) is formed from a series of discrete rib elements arranged at intervals.

14. A battery assembly according to Claim 12 or 13 when dependent upon Claim 7, wherein the second connection tab (32) is seated between the ribs (25a, 25b).

15. A battery assembly according to any preceding claim, wherein the protection circuit module (30) comprises a flexible printed circuit board.

## Patentansprüche

1. Batterieanordnung, umfassend:
eine unverkleidete Zelle (10);
ein Schutzschaltungsmodul (30), das mit der unverkleideten Zelle (10) elektrisch verbunden ist und einen internen Anschlussabschnitt (34a) umfasst; und
ein Haltergehäuse (20), das an der unverkleideten Zelle (10) angebracht ist und einen externen Eingangs-/Ausgangsanschlussabschnitt (21) zum Anschluss an eine externe Vorrichtung und einen Anschlussverbindungsabschnitt (22), der mit dem Eingangs-/Ausgangsanschlussabschnitt (21) verbunden ist, umfasst;
worin das Schutzschaltungsmodul (30) auf dem Haltergehäuse (20) gelagert ist, so dass der interne Anschlussabschnitt (34a) mit dem Anschlussverbindungsabschnitt (22) in Kontakt kommt.

2. Batterieanordnung nach Anspruch 1, worin das Haltergehäuse (20) eine Aufhahmestruktur (26) umfasst, auf der das Schutzschaltungsmodul (30) aufgenommen wird, und der Anschlussverbindungsabschnitt (22) von der Aufnahmestruktur (26) durch eine vorbestimmte Lücke beabstandet ist.

3. Batterieanordnung nach Anspruch 2, worin das Schutzschaltungsmodul (30) einen Unterlagenabschnitt (34) umfasst, wobei sich der interne Anschlussabschnitt (34a) auf dem Unterlagenabschnitt (34) befindet und der Unterlagenabschnitt (34) in der Lücke aufgenommen wird.

4. Batterieanordnung nach Anspruch 2 oder 3, worin das Haltergehäuse (20) einen in Längsrichtung verlaufenden Verlängerungsabschnitt umfasst, der von der Aufnahmestruktur (26) hervorsteht, und der externe Eingangs-/Ausgangsanschlussabschnitt (21) auf dem in Längsrichtung verlaufenden Verlängerungsabschnitt angeordnet ist.

5. Batterieanordnung nach Anspruch 4, worin der in Längsrichtung verlaufende Verlängerungsabschnitt in einem Seitenbereich des Haltergehäuses (20) angeordnet ist und das Haltergehäuse (20) ferner einen Aufnahmeabschnitt an einer Position aufweist, die dem externen Eingangs-/Ausgangsanschlussabschnitt gegenüberliegt, wobei der Anschlussverbindungsabschnitt (22) zwischen dem in Längsrichtung verlaufenden Verlängerungsabschnitt und dem Aufnahmeabschnitt angeordnet ist.

6. Batterieanordnung nach Anspruch 5, wenn von Anspruch 3 abhängig, worin der Unterlagenabschnitt (34) mindestens einen Vorsprungsabschnitt zum Halten des Unterlagenabschnitts (34) zwischen dem in Längsrichtung verlaufenden Verlängerungsabschnitt und dem Aufnahmeabschnitt umfasst.

7. Batterieanordnung nach einem der vorhergehenden Ansprüche, worin eine erste Verbindungslasche (31) in einem Endbereich des Schutzschaltungsmoduls (30) angeordnet und mit einem Elektrodenanschluss (11) der unverkleideten Zelle (10) verbunden ist; und eine zweite Verbindungslasche (32) in einem unteren Bereich des Schutzschaltungsmoduls (30) angeordnet und mit der Außenseite der unverkleideten Zelle (10) verbunden ist.

8. Batterieanordnung nach Anspruch 7, ferner ein Element mit positivem Temperaturkoeffizienten umfassend, das zwischen eine der Anschlusslaschen und die unverkleidete Zelle (10) geschaltet ist.

9. Batterieanordnung nach Anspruch 7 oder 8, umfassend ein erstes Loch im Schutzschaltungsmodul (30) und ein zweites Loch im Haltergehäuse (20) zum Anschweißen der zweiten Verbindungslasche (32) an die Außenseite der unverkleideten Zelle (10).

10. Batterieanordnung nach einem der vorhergehenden Ansprüche, worin der interne Anschlussabschnitt (34a) und der Anschlussverbindungsabschnitt (22) miteinander verschweißt sind.

11. Batterieanordnung nach einem der vorhergehenden Ansprüche, worin das Haltergehäuse (20) mit Isolierband (60) an der unverkleideten Zelle befestigt ist.

12. Batterieanordnung nach einem der vorhergehenden Ansprüche, worin ein Paar gegenüberliegender Rippenstrukturen (25a, 25b) an der Unterseite des Haltergehäuses (20) ausgebildet ist, wobei jede der gegenüberliegenden Rippenstrukturen (25a, 25b) in einem jeweiligen Randbereich ausgebildet ist.

13. Batterieanordnung nach Anspruch 12, worin mindestens eine der Rippenstrukturen (25b) aus einer Folge von einzelnen in Intervallen angeordneten Rippenelementen gebildet ist.

14. Batterieanordnung nach Anspruch 12 oder 13, wenn abhängig von Anspruch 7, worin die zweite Verbindungslasche (32) zwischen den Rippen (25a, 25b) gelagert ist.

15. Batterieanordnung nach einem der vorhergehenden Ansprüche, worin das Schutzschaltungsmodul (30) eine flexible Leiterplatte umfasst.

## Revendications

1. Ensemble de batterie comprenant:
une pile nue (10) ;
un module de circuit de protection (30) qui est connecté électriquement à la pile nue (10) et qui comprend une partie de borne interne (34a) ; et
un boîtier de support (20) qui est monté sur la pile nue (10) et qui comprend une partie de bornes d'entrée/sortie externe (21) pour une connexion à un dispositif externe et une partie de connexion de borne (22) connectée à la partie de bornes d'entrée/sortie externe (21) ;
dans lequel le module de circuit de protection (30) est placé sur le boîtier de support (20) de sorte que la partie de borne interne (34a) soit en contact avec la partie de connexion de borne (22).

2. Ensemble de batterie selon la revendication 1, dans lequel le boîtier de support (20) comprend une formation de support (26) sur laquelle le module de circuit de protection (30) est supporté et la partie de connexion de borne (22) est espacée de la formation de support (26) d'un espace prédéterminé.

3. Ensemble de batterie selon la revendication 2, dans lequel le module de circuit de protection (30) comprend une partie formant pastille (34), la partie de borne interne (34a) est située sur la partie formant pastille (34), et la partie formant pastille (34) est reçue dans ledit espace.

4. Ensemble de batterie selon la revendication 2 ou 3, dans lequel le boîtier de support (20) comprend une partie d'extension longitudinale faisant saillie de la formation de support (26) et la partie de bornes d'entrée/sortie externe (21) est située sur la partie d'extension longitudinale.

5. Ensemble de batterie selon la revendication 4, dans lequel la partie d'extension longitudinale est agencée dans une région latérale du boîtier de support (20) et le boîtier de support (20) comprend en outre une partie de support à une position faisant face à la partie de bornes d'entrée/sortie externe, la partie de connexion de borne (22) étant située entre la partie d'extension longitudinale et la partie de support.

6. Ensemble de batterie selon la revendication 5 lorsqu'elle dépend de la revendication 3, dans lequel la partie formant pastille (34) comprend au moins une partie saillante pour retenir la partie formant pastille (34) entre la partie d'extension longitudinale et la partie de support.

7. Ensemble de batterie selon l'une quelconque des revendications précédentes, dans lequel une première patte de connexion (31) est située dans une région d'extrémité du module de circuit de protection (30) et est connectée à une borne d'électrode (11) de la pile nue (10) ; et une deuxième patte de connexion (32) est située dans une région inférieure du module de circuit de protection (30) et est connectée à l'extérieur de la pile nue (10).

8. Ensemble de batterie selon la revendication 7, comprenant en outre un élément à coefficient de température positif connecté entre l'une desdites pattes de connexion et la pile nue (10).

9. Ensemble de batterie selon la revendication 7 ou 8, comprenant un premier trou dans le module de circuit de protection (30) et un deuxième trou dans le boîtier de support (20) pour souder la deuxième patte de connexion (32) sur l'extérieur de la pile nue (10).

10. Ensemble de batterie selon l'une quelconque des revendications précédentes, dans lequel la partie de borne interne (34a) et la partie de connexion de borne (22) sont soudées l'une à l'autre.

11. Ensemble de batterie selon l'une quelconque des revendications précédentes, dans lequel le boîtier de support (20) est fixé à la pile nue par l'intermédiaire d'une bande isolante (60).

12. Ensemble de batterie selon l'une quelconque des revendications précédentes, dans lequel une paire de formations de nervures opposées (25a, 25b) est formée sur le fond du boîtier de support (20), chaque dite formation de nervure (25a, 25b) étant formée dans une région de bord respective.

13. Ensemble de batterie selon la revendication 12, dans lequel au moins l'une des formations de nervures (25b) est formée à partir d'une série d'éléments de nervure discrets agencés à intervalles.

14. Ensemble de batterie selon la revendication 12 ou 13 lorsqu'elles dépendent de la revendication 7, dans lequel la deuxième patte de connexion (32) est placée entre les nervures (25a, 25b).

15. Ensemble de batterie selon l'une quelconque des revendications précédentes, dans lequel le module de circuit de protection (30) comprend une carte de circuit imprimé souple.
